Europäisches Patentamt

European Patent Office

Office européen des brevets

(19)

(11) **EP 0 554 718 B1**

(12) **EUROPÄISCHE PATENTSCHRIFT**

(45) Veröffentlichungstag und Bekanntmachung des Hinweises auf die Patenterteilung:
**06.03.1996 Patentblatt 1996/10**

(51) Int Cl.6: **C08G 18/08**, C08G 18/10, C08G 18/12, B01J 19/28

(21) Anmeldenummer: **93100874.2**

(22) Anmeldetag: **21.01.1993**

(54) **Verfahren zur kontinuierlichen Herstellung von Polyurethan- und Polyurethanharnstoff-Prepolymeren**

Process for the continuous preparation of polyurethane and polyurethane urea prepolymers

Procédé pour la préparation continue de prépolymères de polyuréthane et de polyuréthane urée

(84) Benannte Vertragsstaaten:
**BE CH DE ES FR GB IT LI NL**

(30) Priorität: **03.02.1992 DE 4202972**

(43) Veröffentlichungstag der Anmeldung:
**11.08.1993 Patentblatt 1993/32**

(73) Patentinhaber: **BAYER AG**
**D-51368 Leverkusen (DE)**

(72) Erfinder:
• **Orthmann, Ernst, Dr.**
**W-4047 Dormagen (DE)**

• **Wulff, Klaus, Dr.**
**W-4150 Krefeld (DE)**
• **Hoeltzenbein, Peter, Dipl.-Ing.**
**W-4047 Dormagen (DE)**
• **Judat, Helmut, Dr.**
**W-4018 Langenfeld (DE)**
• **Wagner, Hans, Dr.**
**W-4047 Dormagen (DE)**
• **Zaby, Gottfried, Dr.**
**W-5090 Leverkusen (DE)**
• **Heidingsfeld, Herbert, Dipl.-Ing.**
**W-5020 Frechen (DE)**

(56) Entgegenhaltungen:
EP-A- 0 012 414        EP-A- 0 322 647
US-A- 4 334 783

## Beschreibung

Die Erfindung betrifft ein Verfahren zur kontinuierlichen Herstellung von Polyurethan- und Polyurethanharnstoff-Prepolymeren durch Umsetzung von Polyisocyanaten mit Polyhydroxyverbindungen oder Polyaminverbindungen mit Molekulargewicht 400 bis 10.000.

Es ist bekannt, derartige Prepolymere aus Polyisocyanaten und Polyhydroxyl- und/oder Polyaminoverbindungen herzustellen.

Bekannt sind Herstellungsverfahren im Reaktionskessel, mit Mischköpfen, Statikmischern oder Schneckenmaschinen.

Als nachteilig hat sich bei Prepolymerherstellungsverfahren in einem Reaktionskessel, wie er Band 19, Ullmann's Enzyklopädie der technischen Chemie Kap. 9.3 Verlag Chemie, Weinheim (1982), beschrieben wird herausgestellt, daß sich im Laufe der Umsetzung der Prepolymere zu Polyurethan-Elastomeren die chemischen und physikalischen Eigenschaften, wie Reaktivität, Vernetzungsgrad und Viskosität, dieser Prepolymere nachteilig verändern, so daß damit nicht gleichmäßig produziert werden kann.

Kontinuierliche Herstellungsmethoden mit Mischköpfen, wie sie ebenfalls in Ullmann's Enzyklopädie beschrieben werden, haben als Nachteil ergeben, daß die Vermischung nur bis zu einem gewissen Grad und nur bei chemisch gleichartigen Ausgangsstoffen erfolgen kann. Ein weiteres Problem ist die Abdichtung der Wellendurchführungen der Mischelemente im Mischkopfgehäuse gegen den Innendruck und das nicht schmierende und dichtende Medium der Polyisocyanate, Daher können im System keine höheren Drücke angewendet werden.

In der deutschen Offenlegungsschrift 2 842 806 wird ein kontinuierliches Verfahren beschrieben, die oben genannten Komponenten in einer zweiwelligen Schneckenmaschine mit gleichsinnig rotierenden Schneckenwellen und selbstreinigender Schneckengeometrie bei Temperaturen zwischen 70 und 260°C herzustellen. Nachteilig hat sich erwiesen, daß die Komponenten bei diesen Temperaturen sehr dünnflüssig sind, die Mischwirkung durch die Rotation zweier gleichsinnig drehender Wellen nicht groß ist und die Verweilzeit für ein vollständiges Ausreagieren nicht ausreichend ist.

In der deutschen Offenlegungsschrift 2 302 564 werden zur Herstellung von Prepolymeren kleinvolumige, gerührte Mischkammern und Mischdüsen zur Mischung genannt. Mischdüsen sind bekannte Organe zur Vermischung von Flüssigkeiten. Detaillierte Angaben über Geometrie der Mischdüse, und Anordnung der Mengenströme oder Druckverhältnisse werden nicht gemacht. In den Beispielen für das erfindungsgemäße Verfahren wird nur ein Mischkopf, aber keine Mischdüsen zur Herstellung eines Prepolymeren aus Polyisocyanaten und Polyolgemischen verwendet. Ein Verfahren mit einer Mischdüse wird nicht beschrieben.

In der deutschen Offenlegungsschrift 2 823 762 wird ein kontinuierliches Verfahren beschrieben, bei dem die Ausgangskomponenten durch eine Mischzone, einem Statikvormischer, geleitet werden, in der eine Durchmischung stattfindet, wobei die Produkttemperatur so niedrig ist, daß eine Reaktion weitgehend vermieden wird, um ein Ansetzen der Produkte zu vermeiden. Mit diesem Verfahren wird zwar eine gute Vermischung erreicht, aber durch Verhinderung der Reaktion mit tiefen Temperaturen eine Entmischung in der Reaktionszone nicht verhindert. Das Prepolymere besitzt im Folgeschritt nicht ausreichend Reaktionszeit, um vollständig und gleichmäßig auszureagieren.

In der Europäischen Patentschrift 0 087 817 wird ein Verfahren beschrieben, mit dem Prepolymere hergestellt werden, indem die Edukte in einen Statikmischer mit innenliegenden Wärmetauschern eindosiert werden. Die optimale Vermischung wird durch innenliegende Mischelemente bewirkt, die auch für eine rückstandsfreie Pfropfenströmung im System sorgen. Dieses Verfahren ist nur geeignet für niedrigviskose Prepolymere und nur für Produktionen ohne Rohstoffwechsel. Denn in den Mischelementen setzen sich mit der Zeit Reste, teilweise sogar übervernetzt und verbräunt, fest, die nach Umsetzung zu thermoplastischen Elastomeren zu Produktverunreinigungen im Fertigteil oder zu nicht aufschmelzbaren Teilchen in Extrudaten, wie Folien, führen.

Es bestand somit die Aufgabe, ein neues Verfahren zur kontinuierlichen Herstellung von Polyurethan- und/oder Polyurethanharnstoff-Prepolymeren durch Umsetzung von Polyisocyanaten mit Polyhydroxyverbindungen und/oder Polyaminverbindungen mit Molekulargewicht 400 bis 10.000 zu entwickeln,

- bei dem die Vermischung zur feinsten Verteilung erfolgt,

- keine Dichtungsprobleme durch sich drehende Teile zur Außenumgebung auftreten sollten,

- ausreichend Reaktionszeit zum vollständigen Umsatz zur Verfügung stehen sollte, bis das Prepolymere mit Kettenverlängerern, wie kurzkettige Diole oder Diamine, zum thermoplastischen Polyurethan umgesetzt wird, - reinigungsfreundlich ist und zu keinen Produktanbackungen oder Verstopfungen im System führt.

Diese Aufgabe wurde erfindungsgemäß dadurch gelöst, daß man zur Herstellung des Prepolymeren die Polyisocyanate mit Polyhydroxyverbindungen oder Polyaminverbindungen in einer speziellen Düse der nachstehend näher beschriebenen Art zusammenführt.

Gegenstand der Erfindung ist ein Verfahren zur kontinuierlichen Herstellung von Polyurethan- und Polyurethanharnstoff-Prepolymere durch Umsetzung

- von Polyisocyanaten (A)

- mit Polyhydroxyverbindungen (B) und/oder Polyaminverbindungen (C) mit Molekulargewicht 400 bis 10.000

- gegebenenfalls in Gegenwart von monofunktionellen Verbindungen wie Monoisocyanaten, Monoalkoholen oder Monoaminen (D)

- und Aktivatoren, Stabilisatoren, Gleitmittel und weiteren, an sich bekannten Zuschlagstoffen (E),

dadurch gekennzeichnet, daß man zur Herstellung die Ausgangsstoffe oder Ausgangsgemische, nämlich eine isocyanat- und eine hydroxyl- undloder aminhaltige Komponente, in einer Düse (1) zusammenführt, indem die eine der beiden Komponenten in dieser Düse (1) eingeschnürt wird und die andere Komponente in dieser Einschnürung (3) dem Strom der ersten Komponente in mehreren Teilströmen durch eine entsprechende Anzahl von über den Umfang der Einschnürung (3) verteilten Bohrungen (5) von einer Seite her zugeführt und das entstehende Produkt in einer Rohrleitung als Verweilzeitstrecke (9), bevorzugt ohne Einbauten umgesetzt wird.

Es hat sich überraschenderweise gezeigt, daß bei diesem Verfahren mit niedrigen Druckverlusten gearbeitet werden kann und bei geringen Verweilzeiten durch die extrem gute Mischwirkung der Düse ein hoher Umsetzungsgrad erzielbar ist.

Die verwendete Düse wird auch als Ringlochdüse bezeichnet, Die Einschnürung des Hauptstromes kann sprunghaft oder stetig erfolgen. Da in der Ringlochdüse zur Erzielung optimaler Vermischung in der Regel nur ein Druckverlust von etwa 3 bar erforderlich ist, können die Vordrücke der Komponentenströme in der Regel klein gehalten werden, Dadurch können die bisher üblichen Pumpen eingesetzt werden und das bestehende Rohrleitungssystem beibehalten werden, Es können jedoch auch höhere Druckverluste zur Anwendung gelangen, wenn der Nachteil des höheren Vordruckes in Kauf genommen wird.

Erfindungsgemäß zu verwendende Polyisocyanate A) sind die an sich bekannten aliphatischen, cycloaliphatischen, araliphatischen, aromatischen und heterocyclischen Diisocyanate des Standes der Technik, Erfindungsgemäß bevorzugte Diisocyanate sind aromatische Diisocyanate, Naphthylen-1,5-diisocyanat, 3,3'-Dimethyl-4,4'-diisocyanatodiphenyl (TODI), 1,4-Diisocyanatobenzol und das entsprechend hydrierte Produkt, Toluylendiisocyanate und insbesondere die Diphenylmethandiisocyanat-Isomeren. Besonders bevorzugt ist das 4,4 -Diisocyanatodiphenylmethan oder sein Isomerengemisch mit bis zu 5 Mol-%, vorzugsweise 1 bis 4 Mol-R, des 2,4'-Diisocyanatodiphenylmethans, zumeist begleitet von sehr geringen Mengen des 2,2'-Diisocyanato-diphenylmethan-Isomeren.

Die genannten Diisocyanate können gegebenenfalls zusammen bis etwa 15 Mol-% (bezogen auf Diisocyanat) eines höherfunktionellen Polyisocyanates eingesetzt werden; die Menge des höherfunktionellen Polyisocyanats muß jedoch so begrenzt werden, daß nach Weiterverarbeiten der Prepolymeren gemäß vorliegender Erfindung zu thermoplastischen Polymeren ein noch schmelzbares bzw. thermoplastisches Polyurethanelastomeres erhalten wird. Eine größere Menge an höherfunktionellen Isocyanaten muß im allgemeinen durch die Mitverwendung von im Durchschnitt weniger als difunktionellen Hydroxyl- bzw. Aminoverbindungen bzw. auch von Monoisocyanaten D) ausgeglichen werden, so daß eine zu weit gehende chemische Vernetzung des Produktes vermieden wird. Beispiele für höherfunktionelle Isocyanate und monofunktionelle Verbindungen sind ebenfalls aus dem oben zitierten Stand der Technik zu entnehmen. Beispielsweise seien Monoamine D) wie Butyl-oder Dibutylamin, Hydroxylamin, Stearylamin, N-Methylstearylamin, sowie Monoalkohole wie Butanol-1, 2-Ethylhexanol-1, Dodecanol-1, Isobutanol oder tert.-Butanol, Cyclohexanol oder Ethylenglykolmonomethylether und Stearylalkohol erwähnt.

Ferner können in dem Fachmann bekannter Form monofunktionelle Verbindungen D) in untergeordneten Anteilen, z.B. von 0,01 bis 4 Gew.-%, bezogen auf PU-Feststoff, als sogenannte Kettenabbrecher mitverwendet werden. Beispiele sind Monoalkohole wie Butanol, 2-Ethylhexanol, Isobutylalkohol, Octanol-1, Stearylalkohol oder Monoamine wie Anilin, Dibutylamin, N-Methylstearylamin oder Piperidin.

Bevorzugte Hydroxylgruppen-haltige höhermolekulare Verbindungen B) sind Polyester-, Polyestercarbonat- und Polyetherdiole, z.B. Polyesterdiole aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure, sowie deren Hydrierungsprodukte enthalten.

Ferner sind geeignet Hydroxylpolycarbonate, Hydroxypolycaprolactone. In einer besonders bevorzugten Ausführungsform wird Butandiol-1,4-adipat vom Molekulargewicht 1500 bis 5000 verwendet.

Bevorzugt werden ferner Hydroxyetherdiole auf Basis Ethylenoxid, Propylenoxid oder Mischpolyether aus Propylenoxid und/oder Ethylenoxid und/oder Tetrahydrofuran, so z.B. Hydroxyetherdiole auf Basis Tetrahydrofuran mit einem Molekulargewicht von 1000 bis 3000. Geeignete Polyole werden z.B. in den deutschen Offenlegungsschriften 23 02 564, 24 23 764, 25 49 372 (US-PS 3 963 679), DE-OS 24 02 840 (US-PS 3 984 607), DE-AS 24 57 387 (US-PS 4 035 213) und in der DE-OS 2 854 384, 2 920 501 und 3 405 531 eingehend beschrieben.

Gegebenenfalls können auch höhermolekulare Polyaminoverbindungen, vorzugsweise mit primären aromatischen Aminogruppen eingesetzt werden. Bevorzugte Vertreter werden beispielsweise durch Hydrolyse von entsprechenden NCO-Prepolymeren auf der Basis von höhermolekularen Polyhydroxyverbindungen und überschüssigen aromatischen Diisocyanaten durch (vorzugsweise basische) Hydrolyse hergestellt. Beispiele für diese Verfahren werden in DE-A-2 948 419, DE-A-3 039 600, DE-A-3 112 118, EP-A-61 627, EP-A-71 132 und EP-A-97 869 angegeben. In der erstgenannten Patentschrift werden auch weitere Verfahren des Standes der Technik zur Herstellung von aromatischen Aminoverbindungen höhermolekularer Struktur, sogenannter Aminopolyether, genannt, wie sie für das erfindungsgemäße Verfahren geeignet sind. Weitere Herstellungsverfahren werden in der DE-AS 1 694 152, FR-PS 1 415 317 oder DE-AS 1 155 907 beschrieben.

Vor und/oder bei und/oder nach der Polyurethan-Reaktion können selbstverständlich die üblichen Hilfsstoffe E) wie Katalysatoren, Trennmittel, Antistatika, Flammschutzmittel und Einfärbemittel nach dem Stand der Technik (siehe z.B. DE-A-28 54 409, DE-OS 29 20 501 und DE-PS 33 29 775) zugegeben werden. Auch Antioxidantien und UV-Absorber (Lichtschutzmittel) sind nach dem Stand der Technik möglich (siehe DE-A-34 05 531).

Als Katalysatoren können so z.B. tertiäre Amine, organische Metallverbindungen, insbesondere organische Zinn-, Blei- und Titanverbindungen eingesetzt werden, z.B. Zinn-II-acetat, Zinn-II-ethylhexoat, Dibutylzinndilaurat oder Bleiacetat.

Als Trennmittel werden vorzugsweise Wachse oder Öle verwendet, ferner z.B. langkettige Verbindungen mit Carboxyl-, Ester-, Amid-, Urethan- oder Harnstoffgruppen sowie auch Silicone, wie sie als Trennmittel beispielsweise in der DE-OS 2 204 470 aufgeführt sind.

Die Mengen an Reaktionskomponenten A) bis E) für die Polyurethan- oder Polyurethanharnstoff-Prepolymere werden im erfindungsgemäßen Verfahren in der Regel so gewählt, daß das NCO/OH bzw. NCO/NHR Verhältnis von Isocyanat zu OH-Verbindungen bzw. Aminverbindungen zwischen 11 : 1 und 1 : 1, bevorzugt zwischen 6 : 1 und 3 : 1, liegt.

Die genannten Komponenten können entweder in Reinform, als auch miteinander vermischt oder als teilweise miteinander abreagierte Mischungen in der Ringlochdüse homogenisiert und anschließend zur Reaktion gebracht werden.

Vorzugsweise wird der größere Volumenstrom durch die Einschnürung (3) geführt, wobei im Falle der Verwendung von annähernd gleichen Volumenströmen jede der beiden Komponenten einen Mittel- bzw. Seitenstrom bilden kann. Die Beachtung dieser Maßnahmen dient einer optimalen Vermischung und damit einwandfreien Reaktionsablauf.

Vorzugsweise wird der Polyisocyanat-haltige Komponentenstrom durch die Seitenbohrungen (5) geführt, wenn der Volumenstrom kleiner als der Volumenstrom der Polyol- oder Polyamin-Komponente ist.

Werden mehrere erfindungsgemäße Prepolymerdüsen hintereinander geschaltet, um eine Prepolymer- und evtl. Polyisocyanat-haltige Komponente mit anderen Komponenten wie einer Polyol- oder Polyamin-Komponente oder flüssigen Additiven zu vermischen, kann der Polyisocyanat-haltige Komponentenstrom auch den Hauptstrom bilden.

Gemäß einer besonderen Verfahrensweise wird in der Einschnürung eine Strömungsgeschwindigkeit von 1 bis 10 m/sec eingehalten. Es können jedoch auch höhere Strömungsgeschwindigkeiten in der Einschnürung beispielsweise bis zu 50 m/sec eingehalten werden, wenn der Nachteil des hierzu erforderlichen hohen Pumpenvordrucks in Kauf genommen wird. Umgekehrt kann selbstverständlich bei der bevorzugten Strömungsgeschwindigkeit von 1 bis 10 m/sec der Vordruck in vorteilhafter Weise gering gehalten werden.

Vorzugsweise weist die Einschnürung über ihre gesamte Länge L einen konstanten Durchmesser D auf.

Vorzugsweise wird als Länge L mindestens der zweifache Durchmesser D der Einschnürung gewählt.

Diese Ausgestaltung dient einer besonders intensiven Vermischung und die Strömung stabilisiert sich in ausreichender Weise.

Besonders vorteilhaft ist es, für die Länge $L_1$ der Einschnürung des axial zugeführten Stromes bis zur Zusammenführung mit den Teilströmen der zweiten Komponente das 0,5- bis 2-fache des Durchmessers D der Einschnürung zu wählen.

Die genannten Maßnahmen stellen sicher, daß die Mischung in der Düse optimal ist und sich keine Anbackungen festsetzen.

Eine besonders hohe Ausbeute läßt sich erzielen, indem ein Leistungsverhältnis des axial zugeführten Stromes $\varepsilon_A$ zum seitlich zugeführten Strom $\varepsilon_S$

$$\frac{\varepsilon_A}{\varepsilon_S} = \frac{\rho_A \cdot \overset{o}{V}_A \cdot v_A^2}{\rho_S \cdot \overset{o}{V}_S \cdot v_S^2} = 0,01 \text{ bis } 1,0,$$

vorzugsweise von 0,02 bis 0,5 und besonders bevorzugt von 0,03 bis 0,25, eingehalten wird, wobei

ρ   die Dichte,

$\dot{V}$  den Volumenstrom,

v   die Strömungsgeschwindigkeit,
und zwar jeweils mit dem Index A des axial zugeführten Stromes und jeweils mit dem Index S des seitlich zugeführten Stromes bedeuten.

Die hiermit erzielbare hohe Ausbeute gewährleistet gleichzeitig einen niedrigen Energieeinsatz und kurze Verweilzeitstrecken.

Gemäß einer weiteren besonderen Durchführungsform wird hinter der Einschnürung der Strömungsquerschnitt stetig erweitert.

Dadurch wird erreicht, daß keine Verwirbelung und Rückströmung stattfinden können. Es versteht sich, daß die Erweiterung bei einem Maximum endet, welches dem Durchmesser einer anschließenden Rohrleitung entspricht. Die Vermeidung einer Rückströmung bietet eine besondere Gewähr für eine einheitliche Reaktionszeit, d.h. Verweilzeit des Prepolymeren bis zur Weiterverarbeitung.

Die Anzahl i der Bohrungen für die seitlich zuzuführenden Teilströme wird gemäß einer weiteren Verfahrensvariante zwischen $2 \leq i \leq m$, vorzugsweise zwischen $4 \leq i \leq m$, gewählt, wobei sich m aus der Bedingung

$$\frac{\pi \cdot D}{m \cdot d} = > 1,1 \ ,$$

vorzugsweise $> 1,5$, insbesondere $\geq 2$ ergibt, wobei D den Durchmesser der Einschnürung und d den Durchmesser der Bohrungen bedeuten.

Diese Maßnahme wirkt sich ebenfalls günstig auf die Vermischung und damit auf die Reaktion aus.

Vorzugsweise werden alle Bohrungen in einer gemeinsamen Ebene senkrecht zur Einschnürung angeordnet, obwohl auch Abweichungen hiervon möglich sind.

Dadurch wird erreicht, daß die Reaktion nur in dieser Ebene starten kann, also bereits reagierendes Produkt nicht mehr erneut mit der zweiten Komponente beaufschlagt wird.

Da die Polyol-/Polyamin-Mischung im allgemeinen den größeren Volumenstrom darstellt, wird sie, den oben gemachten Ausführungen entsprechend, im allgemeinen durch die Einschnürung geleitet.

Die Zeichnungen dienen zur näheren Erläuterung des erfindungswesentlichen Mischaggregats.

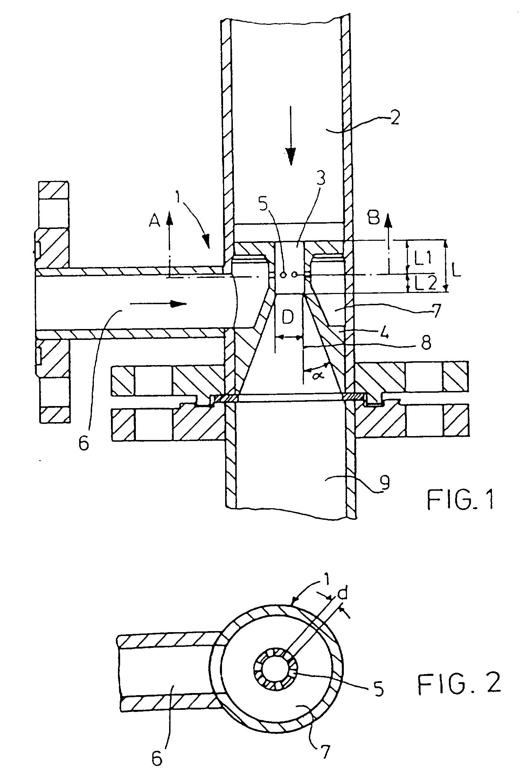

Fig. 1 zeigt die Düse im Längsschnitt und

Fig. 2 einen Schnitt gemäß Linie A-B in Fig. 1.

Im einzelnen bedeuten:

(1) die erfindungsgemäß zu verwendende Düse;

(2) das Zuleitungsrohr für den Hauptstrom;

(3) die sprunghafte Einschnürung des Hauptstroms;

(4) den die Einschnürung verursachenden Einsatz mit eingebauten Seitenbohrungen;

(5) die Seitenbohrungen;

(6) die Zuleitung des Seitenstroms;

(7) die die Einschnürung (3) umgebende Kammer, aus welcher die Bohrungen (5) abführen;

(8) die stetige Erweiterung am Ausgang der Düse;

(9) das Abführrohr = Verweilzeitstrecke

D den Innendurchmesser der Einschnürung;

d den Durchmesser der Seitenbohrungen;

L die Gesamtlänge der Einschnürung;

$L_1$ den Abstand vom Beginn der Einschnürung bis zur Ebene der Seitenbohrungen und

$L_2$ den Abstand von der Ebene der Seitenbohrungen bis zum Beginn der stetigen Erweiterung.

Zur Herstellung der Reaktionsmischungen unter Verwendung des erfindungswesentlichen Mischaggregats kann beispielsweise wie folgt vorgegangen werden:

Einer Düse (1) wird über ein Zuleitungsrohr (2), welches sprunghaft in eine in der Düse (1) angeordnete Einschnürung (3) übergeht, der Hauptstrom zugeführt. Die Einschnürung (3) ist in einem Einsatz (4) angeordnet. Die Einschnürung (3) weist über ihre gesamte Länge L den konstanten Durchmesser D auf und im Abstand $L_1$, welcher z.B. dem 1,5-fachen Durchmesser D der Einschnürung (3) entspricht, sind z.B. sechs Bohrungen (5) über dem Umfang regelmäßig verteilt angeordnet. Einander gegenüberliegende Bohrungen (5) sind um den Durchmesser d gegeneinander versetzt, so daß die eingespritzten Teilströme aneinander vorbeizielen. Die zweite Komponente wird über ein Zuleitungsrohr (6) einer die Einschnürung (3) umgebenden Kammer (7), aus welcher die Bohrungen (5) abführen, zugeführt. Die Länge $L_2$ der Einschnürung (3) hinter den Bohrungen (5) entspricht z.B. dem Durchmesser D der Einschnürung (3). Hinter der Einschnürung 3 weist die Düse (1) eine stetige Erweiterung 8 auf, deren Winkel $\alpha$ mit der Achse z.B. 20° beträgt. An diese Erweiterung 8 schließt sich ein Abführrohr (9) gleichen Durchmessers wie das Zuleitungsrohr (2) an. Dieses Abführrohr fungiert als Verweilzeitstrecke und kann in Länge und Durchmesser so angepaßt werden, daß unter den gewählten Reaktionsbedingungen genau der vollständige Umsatz, eventuell auch ein gewünschter Verzweigungsgrad, erreicht wird, wenn das Prepolymere weiter umgesetzt wird.

Um bei größeren Durchmessern ein größeres Verweilzeitspektrum zu verhindern, können Einbauten eingesetzt werden, um die Unterschiede der Strömungsgeschwindigkeit vom Rohrinnern zum Rand auszugleichen.

Die unter Verwendung des erfindungswesentlichen Mischaggregats hergestellten Reaktionsgemische können im Anschluß an ihre Herstellung zu thermoplastischen Polyurethanen oder Polyurethanharnstoffen mit kurzkettigen Diolen, Diaminen oder Hydroxylaminen nach den üblichen Verfahren, wie sie z.B. in DOS 2 302 564, DOS 2 447 368, DOS 2 549 372, DOS 2 823 762, DOS 2 842 806 und DOS 3 224 324 aufgeführt sind, umgesetzt werden.

Der Gegenstand der Erfindung soll anhand der folgenden Beispiele noch näher erläutert werden:

## Beispiel 1

100 Gew.-Teile eines Polyesters aus Adipinsäure und Butandiol-1,4 (OH-Zahl 50, Säurezahl = 0,7), welcher mit 10 ppm Titantetrabutylat aktiviert wurde, wurden mit 150 Gew.-Teile flüssiges 4,4'-Diisocyanatdiphenylmethan kontinuierlich in konstantem Mengenverhältnis in der speziellen beschriebenen Düse (L = 10 mm, $L_1$ = 6 mm, $L_2$ = 4 mm, d = 0,7 mm, D = 4 mm, i = 6) zu einem Prepolymer vermischt und in dem anschließenden Verweilzeitraum zur Reaktion gebracht, indem der Polyester durch die Einschnürung geleitet und das flüssige 4,4'-Diisocyanatdiphenylmethan seitlich durch die Bohrungen zugeführt wird. Vom entstandenen Reaktionsprodukt wurde eine Probe genommen und der Restisocyanatgehalt durch potentiometrische Titration mit Dibutylamin-Lösung und alkoholischer Salzsäure bestimmt.

Rest-NCO-Gehalt = 18,91 % entspricht 96,8 % Umsatz zum Prepolymer theoretischer Gehalt bei 100 % Umsatz = 18,95 %.

## Beispiel 2

50 Gew.-Teile eines Polyesters aus Adipinsäure und Butandiol-1,4 (OH-Zahl 50, Säurezahl = 0,7), welcher mit 10 ppm Titantetrabutylat aktiviert und 50 Gew.-Teile eines Polycarbonatdiols aus Diphenylcarbonat und Hexandiol-1,6 (MG = 2000) hergestellt, wurden mit 49 Gew.-Teile flüssiges 4,4'-Diisocyanatdiphenylmethan kontinuierlich in konstantem Mengenverhältnis in der speziellen beschriebenen Düse (L = 10 mm, $L_1$ = 6 mm, $L_2$ = 4 mm, d = 0,7 mm, D = 4 mm, i = 4) zu einem Prepolymer vermischt und in dem anschließenden Verweilzeitraum zur Reaktion gebracht, indem das Gemisch aus Polyester und Polycarbonatdiols durch die Einschnürung geleitet und das flüssige 4,4'-Diisocyanatdiphenylmethan seitlich durch die Bohrungen zugeführt wird.

Vom entstandenen Reaktionsprodukt wurde eine Porbe genommen und der Restisocyanatgehalt durch potentiometrische Titration mit Dibutylamin-Lösung und alkohlischer Salzsäure bestimmt.

Rest-NCO-Gehalt = 8,64 %, entspricht 99,8 % Umsatz zum Prepolymer, theoretischer Gehalt bei 100 % Umsatz = 8,65 %.

<u>Beispiel 3</u>

50 Gew.-Teile eines Polytetramethylenoxidethers mit Molekulargewicht 1000 und 50 Gew.-Teile eines Polytetramethylenoxidethers mit Molekulargewicht 2000 wurden mit 96 Gew.-Teile flüssiges 4,4'-Diisocyanatdiphenylmethan kontinuierlich in konstantem Mengenverhältnis in der speziellen beschriebenen Düse ($L = 10$ mm, $L_1 = 6$ mm, $L_2 = 4$ mm, $d = 0,7$ mm, $D = 4$ mm, $i = 4$) zu einem Prepolymer vermischt und in dem anschließenden Verweilzeitraum zur Reaktion gebracht, indem die Polyethermischung durch die Einschnürung geleitet und das flüssige 4,4'-Diisocyanatdiphenylmethan seitlich durch die Bohrungen zugeführt wird. Vom entstandenen Reaktionsprodukt wurde eine Probe genommen und der Restisocyanatgehalt durch potentiometrische Titration mit Dibutylamin-Lösung und alkoholischer Salzsäure bestimmt.

Rest-NCO-Gehalt = 13,72 %, entspricht 98,7 % Umsatz zum Prepolymer, theoretischer Gehalt bei 100 % Umsatz = 13,55 %.

**Patentansprüche**

1. Verfahren zur kontinuierlichen Herstellung von Polyurethan- und/oder Polyurethanharnstoff-Prepolymeren durch Umsetzung von

   A) Polyisocyanaten mit

   B) Polyhydroxylverbindungen vom Molekulargewicht 400 bis 10.000 und/oder

   C) Polyaminoverbindungen vom Molekulargewicht 400 bis 10.000

   D) gegebenenfalls Monoisocyanaten und/oder gegenüber Isocyanaten monofunktionellen Verbindungen, sowie
   gegebenenfalls in Gegenwart von

   E) Aktivatoren, Stabilisatoren, Gleitmittel und weiteren, an sich bekannten Zuschlagstoffen,
   dadurch gekennzeichnet, daß man zur Herstellung die Ausgangsstoffe oder Ausgangsgemische, nämlich eine isocyanathaltige und eine hydroxyl- und/oder aminhaltige Komponente, in einer Düse (1) zusammenführt, indem die eine der beiden Komponenten in dieser Düse (1) eingeschnürt wird und die andere Komponente in dieser Einschnürung (3) dem Strom der ersten Komponente in mehreren Teilströmen durch eine entsprechende Anzahl von über den Umfang der Einschnürung (3) verteilten Bohrungen (5) von einer Seite her zugeführt wird und das entstehende Produkt in einer Verweilzeitstrecke (9) umgesetzt wird.

2. Verfahren nach Anspruch 1, dadurch gekennzeichnet, daß der größere Volumenstrom durch die Einschnürung (3) geführt wird.

3. Verfahren nach Anspruch 1 oder 2, dadurch gekennzeichnet, daß in der Einschnürung eine Strömungsgeschwindigkeit von 1 bis 10 m/sec eingehalten wird.

4. Verfahren nach einem der Ansprüche 1 bis 3, dadurch gekennzeichnet, daß die Einschnürung (3) über ihre gesamte Länge L einen konstanten Durchmesser D aufweist.

5. Verfahren nach Anspruch 4, dadurch gekennzeichnet, daß die Länge L mindestens dem 2-fachen Durchmesser D der Einschnürung (3) entspricht.

6. Verfahren nach einem der Ansprüche 1 bis 5, dadurch gekennzeichnet, daß für die Länge $L_1$ der Einschnürung (3) des axial zugeführten Stromes bis zur Zusammenführung mit den Teilströmen der zweiten Komponente das 0,5- bis 2-fache des Durchmessers D der Einschnürung (3) gewählt wird.

7. Verfahren nach einem der Ansprüche 1 bis 6, dadurch gekennzeichnet, daß der aus den beiden Strömen resultierende Produktstrom einer konstant bleibenden Einschnürung (3) unterworfen wird, deren Länge $L_2$ mindestens jener Strecke entspricht, in welcher die Vermischung vollständig ist.

8. Verfahren nach einem der Ansprüche 1 bis 7, dadurch gekennzeichnet, daß das Leistungsverhältnis des axial zuge-

führten Stromes $\varepsilon_A$ zum seitlich zugeführten Strom $\varepsilon_S$

$$\frac{\varepsilon_A}{\varepsilon_S} = \frac{\rho_A \cdot \overset{\circ}{V}_A \cdot v_A^2}{\rho_S \cdot \overset{\circ}{V}_S \cdot v_S^2} = 0,01 \text{ bis } 1,0,$$

eingehalten wird, wobei

$\rho$    die Dichte,

$\overset{\circ}{V}$   den Volumenstrom,

v    die Strömungsgeschwindigkeit,
und zwar jeweils mit dem Index A des axial zugeführten Stromes und jeweils mit dem Index S des seitlich zugeführten Stromes,

bedeuten.

9. Verfahren nach einem der Ansprüche 1 bis 8, dadurch gekennzeichnet, daß hinter der Einschnürung (3) der Strömungsquerschnitt stetig erweitert wird.

10. Verfahren nach einem der Ansprüche 1 bis 9, dadurch gekennzeichnet, daß die Anzahl i der Bohrungen (5) für die seitlich zuzuführenden Teilströme zwischen $2 \leq i \leq m$ gewählt wird, wobei sich m aus der Bedingung

$$\frac{\pi \cdot D}{m \cdot d} => 1,1$$

ergibt, wobei D den Durchmesser der Einschnürung (3) und d den Durchmesser der Bohrungen (5) bedeuten.

11. Verfahren nach einem der Ansprüche 1 bis 5, dadurch gekennzeichnet, daß Komponente B oder C mit mindestens 100°C der Düse zugeführt wird.

## Claims

1. A process for the continuous production of polyurethane and polyurethane urea elastomers by reaction of

   A) polyisocyanates with
   B) polyhydroxyl compounds having molecular weights of 400 to 10,000 and/or
   C) polyamino compounds having a molecular weight of 400 to 10,000,
   D) optionally monoisocyanates and/or compounds monofunctional to isocyanates,
   optionally in the presence of
   E) activators, stabilizers, lubricants and other additives known per se,
   characterized in that, for production, the starting materials or starting mixtures, namely an isocyanate-containing component and a hydroxyl- and/or amine-containing component, are combined in a nozzle (1) by constricting one of these two components in the nozzle (1) and introducing the other component into the stream of the first component in this constriction (3) from one side in the form of several partial streams through a corresponding number of bores (5) distributed over the periphery of the constriction (3) and reacting the product formed in a dwell zone (9).

2. A process as claimed in claim 1, characterized in that the larger volume stream is passed through the constriction (3).

3. A process as claimed in claim 1 or 2, characterized in that a flow rate of 1 to 10 m/sec. is maintained in the constriction.

4. A process as claimed in any of claims 1 to 3, characterized in that the constriction (3) has a constant diameter D over its length L.

5. A process as claimed in claim 4, characterized in that the length L corresponds to at least twice the diameter D of the constriction (3).

6. A process as claimed in any of claims 1 to 5, characterized in that the length $L_1$ of the constriction (3) of the axial stream to the point where it is combined with the streams of the second component is between 0.5 and 2 times the diameter D of the constriction (3).

7. A process as claimed in any of claims 1 to 6, characterized in that the product stream resulting from both streams is subjected to a constant constriction (3) over a length $L_2$ at least corresponding to that section in which mixing is largely complete.

8. A process as claimed in any of claims 1 to 7, characterized in that the ratio of the axial stream $\varepsilon_A$ to the lateral stream $\varepsilon_S$

$$\frac{\varepsilon_A}{\varepsilon_A} = \frac{\delta_A \cdot \dot{V}_A \cdot v_A{}^2}{\delta_S \cdot \dot{V}_S \cdot v_S{}^2}$$

where

$\delta$ is the density,
$\dot{V}$ is the volume stream and
$v$ is the flow rate
with the index A of the axial stream and the index S of the lateral stream,

is 0.01 to 1.0.

9. A process as claimed in any of claims 1 to 8, characterized in that the flow cross-section widens steadily after the constriction (3).

10. A process as claimed in any of claims 1 to 9, characterized in that the number i of bores (5) for the lateral streams is between $2 \leq i \leq m$, m being derived from the condition

$$\frac{\pi \cdot D}{m \cdot d} = > 1.1,$$

D being the diameter of the constriction (3) and d the diameter of the bores (5).

11. A process as claimed in any of claims 1 to 10, characterized in that component B or C is delivered to the nozzle at a temperature of at least 100°C.

**Revendications**

1. Procédé pour la préparation en continu de prépolymères de polyuréthanne et/ou de polyuréthanne-urée, par mise en réaction

A) de polyisocyanates avec

B) des composés polyhydroxylés d'un poids moléculaire de 400 à 10.000 et/ou

C) des composés polyaminés d'un poids moléculaire de 400 à 10.000,

D) éventuellement des monoisocyanates et/ou des composés monofonctionnels vis-à-vis d'isocyanates, ainsi que
éventuellement en présence

E) d'activateurs, de stabilisateurs, de lubrifiants et d'autres additifs connus en soi,

caractérisé en ce que, pour la préparation, on introduit de manière conjointe dans une buse (1), les substances de départ ou les mélanges de départ, notamment un composant à teneur isocyanate et un composant à teneur hydroxyle et/ou amino, en faisant passer un des deux composants par un rétrécissement dans cette buse (1) et en acheminant par le côté, l'autre composant dans ce rétrécissement (3) au courant du premier composant, en plusieurs courants partiels, à travers un nombre correspondant d'alésages (5) répartis sur la périphérie du rétrécissement (3) et on fait réagir le produit obtenu dans un tronçon de séjour (9).

2. Procédé selon la revendication 1, caractérisé en ce qu'on guide le courant volumique majeur à travers le rétrécissement (3).

3. Procédé selon la revendication 1 ou 2, caractérisé en ce qu'on maintient dans le rétrécissement, une vitesse d'écoulement de 1 à 10 m/sec.

4. Procédé selon l'une quelconque des revendications 1 à 3, caractérisé en ce que le rétrécissement (3) présente, sur toute sa longueur L, un diamètre constant D.

5. Procédé selon la revendication 4, caractérisé en ce que la longueur L correspond au moins au double du diamètre D du rétrécissement 3.

6. Procédé selon l'une quelconque des revendications 1 à 5, caractérisé en ce que, pour la longueur $L_1$ du rétrécissement (3) du courant acheminé en direction axiale jusqu'au guidage conjoint avec les courants partiels du second composant, on choisit une dimension de diamètre correspondant à 0,5-2 fois le diamètre D du rétrécissement(3) .

7. Procédé selon l'une quelconque des revendications 1 à 6, caractérisé en ce que le courant de produit résultant des deux courants est soumis à un rétrécissement (3) qui reste constant, dont la longueur $L_2$ correspond au moins au tronçon dans lequel le mélange est complet.

8. Procédé selon l'une quelconque des revendications 1 à 7, caractérisé en ce qu'on maintient le rapport du débit du courant $\varepsilon_A$ acheminé en direction axiale à celui du courant $\varepsilon_S$ acheminé en direction latérale à

$$\frac{\varepsilon_A}{\varepsilon_S} = \frac{\rho_A \cdot \overset{\circ}{V}_A \cdot v_A^2}{\rho_S \cdot \overset{\circ}{V}_S \cdot v_S^2} = 0{,}01 \text{ à } 1{,}0,$$

où

$\rho$ représente la masse volumique,

$\overset{\circ}{V}$ représente le courant volumique

$v$ représente la vitesse d'écoulement,

et, en fait, respectivement avec l'indice A du courant acheminé en direction axiale et respectivement avec l'indice S du courant acheminé en direction latérale.

9. Procédé selon l'une quelconque des revendications 1 à 8, caractérisé en ce que, derrière le rétrécissement (3), la section d'écoulement s'élargit en continu.

10. Procédé selon l'une quelconque des revendications 1 à 9, caractérisé en ce qu'on choisit le nombre i des alésages (5) pour les courants partiels à acheminer en direction latérale entre $2 \leq i \leq m$ où m s'obtient à partir de l'équation

$$\frac{\pi \cdot D}{m \cdot d} => 1{,}1$$

où D représente le diamètre du rétrécissement (3) et d représente le diamètre des alésages (5).

11. Procédé selon l'une quelconque des revendications 1 à 5, caractérisé en ce qu'on achemine le composant B ou C à la buse à une température d'au moins 100°C.

FIG. 1

FIG. 2